(19) Europäisches Patentamt
European Patent Office
Office européen des brevets

(11) Numéro de publication: **0 378 486**
**A1**

(12) **DEMANDE DE BREVET EUROPEEN**

(21) Numéro de dépôt: **90420005.2**

(22) Date de dépôt: **03.01.90**

(51) Int. Cl.$^5$: **C08B 37/00, C08B 37/08, C08B 37/10**

(30) Priorité: **05.01.89 FR 8900564**

(43) Date de publication de la demande:
**18.07.90 Bulletin 90/29**

(84) Etats contractants désignés:
**AT BE CH DE DK ES FR GB GR IT LI LU NL SE**

(71) Demandeur: **SOCIETE DE DEVELOPPEMENT DES UTILISATIONS DU CUIR SADUC**
**Zone Industrielle des Troques**
**F-69630 Chaponost(FR)**

(72) Inventeur: **Gagnieu, Christian**
**10 rue du Docteur Despeignes**
**F-69008 Lyon(FR)**
Inventeur: **Dubois, Michel**
**5 et 7 rue Dominget**
**F-69630 Chaponost(FR)**

(74) Mandataire: **Guerre, Dominique et al**
**Cabinet Germain et Maureau 20 Boulevard Eugéne Deruelle BP 3011**
**F-69392 Lyon Cédex 03(FR)**

(54) **Procédé de séparation de glycosaminoglycannes sulfatés.**

(57) La présente invention concerne un procédé de purification de polymères naturels ou synthétiques en solution, hydrosolubles ou solubles en milieu hydro-alcoolique et comportant des groupements sulfates, caractérisé en ce qu'il consiste essentiellement, d'une part, en une précipitation sélective dans laquelle les polymères sulfatés à purifier sont complexés en milieu acide avec une polyamine insoluble à pH supérieur à 7 et, d'autre part, après isolement du complexe ainsi formé, en un relargage progressif des polymères sulfatés.

EP 0 378 486 A1

# Procédé de séparation de glycosaminoglycannes sulfatés

La présente invention concerne la séparation de glycosaminoglycannes sulfatés, désignés sous forme abrégée sous l'appelation GAGs.

Les GAGs envisagés par la présente invention sont des bio-plymères d'origine humaine ou animale, du type polysaccharides, au rang desquels on peut citer :
-les chondroïtines 4 et 6 sulfates
-le dermatane sulfate
-le kératane sulfate
-l'héparane sulfate et les héparines

Pour plus de détails sur ces GAGs, ou mucopolysaccharides, on se référera utilement à la référence bibliographique suivante :
- Aspinall, G.O., Polysaccharides, Pergamon Press, Oxford (1970) dont le contenu est incorporé à la présente description en tant que de besoin.

Différents secteurs techniques requièrent des quantités de plus en plus importantes de GAGs, avec des puretés de plus en plus élevées. On peut citer à cet égard le domaine médical utilisant des biomatériaux, notamment comme substitut de la peau humaine.

Les GAGs sont obtenus à partir de divers tissus animaux : cartilages, cornée, peau et tissus conjonctifs en général. Pour obtenir ou extraire les GAGs de ces matières premières, ces dernières sont broyées pour obtenir un broyat ou hydrolysat en phase aqueuse. Les protéoglycannes présents dans le broyat sont ensuite: dégradés, pour éliminer leurs parties protéiques, et obtenir un milieu complexe comprenant des GAG, et notamment des GAGs. Cette dégradation est faîte selon des techniques conventionnelles telles que digestion par des protéases à large spectre, ou hydrolyse en milieu basique.

Le milieu complexe obtenu comme précédemment contient, hormis les GAGs, divers contaminants, polymères ou non, de nature ionique ou non. Au rang de ces contaminants, on peut en particulier citer ceux possèdant des fonctions acide aminé, comme diverses protéines, divers peptides de nature amphotère, notamment ceux présentant des fonctions carboxyliques portées par des résidus d'acide glutamique et d'acide aspartique ; ces contaminants ne sont pas liés en général par covalence aux GAGs du milieu complexe.

Au plan scientifique ou pratique, différentes méthodes ont été proposées pour séparer par précipation un GAGs présent dans un milieu complexe de départ.

Parmi ces méthodes, on retiendra à titre principal celles consistant à précipiter sélectivement en milieu aqueux le GAGs, par complexation avec une polyélectrolyte hydrosoluble dans un tel milieu, notamment une polyamine, telle que le chitosane. Les documents suivants ont décrit et discuté la formation d'un tel complexe :

(a) Die Makromolekulare Chemie 175,2209-2211 (1974), communication de Yasuo Kikuchi ayant pour titre "Polyelectrolyte complex of Heparin with chitosan" ; selon ce document, l'agent de précipitation du GAGs est une polyamine hydrosoluble, à savoir le chitosane

(b) Document EP-A-0020183 ; selon ce document, l'agent de précipitation du GAGs est une carboxy-méthylchitine, du N-acyl-chitosane, ou un dérivé de ces deux corps

(c) Biopolymers 1978, 17(3), 805-10 (Eng), publication de Hirano S ; Mizutani C ; Yamaguchi R ; Mirura O ; selon ce document, l'agent de précipitation est un chitosane partiellement N-acétylé en milieu acide.

Aucun des documents examinés précédemment ne s'est intéressé à la séparation ultérieure du GAGs, à partir du précipité ou complexe obtenu.

Le document (a) envisage ou décrit la solubilité du complexe obtenu dans un solvant ternaire, par exemple eau/acide chlorhydrique/méthanol, mais sans caractère spécifique vis à vis de tel ou tel constituant du complexe macromoléculaire ionique.

Le document (b) décrit la solubilité du complexe obtenu, selon sa concentration, dans une solution alcaline, acide, ou neutre, toujours sans spécificité vis à vis des deux constituants du complexe macromoléculaire ionique, et en tant que moyen de mise en forme du complexe obtenu, pour extrusion de fils ou films par exemple. Il est au passage indiqué que selon la concentration du complexe dans la solution aqueuse, on peut d'ailleurs aboutir à un gel, c'est à dire à une structure macromoléculaire tridimensionnelle du complexe, emprisonnant le solvant aqueux, cette structure étant alors indissociable. Par ailleurs, il faut souligner que la solubilité du complexe n'existe en milieu alcalin qu'en raison de l'agent de précipitation choisi selon ce document, à savoir carboxy-méthyl chitine, N-acyl-chitosane, ou dérivés du même type, puisque le chitosane est insoluble en milieu aqueux basique.

Le document (c) n'indique ni ne décrit aucun traitement ultérieur du complexe obtenu.

En conséquence, si les documents examinés précédemment on mis on évidence et décrit la précipitation spécifique ou fractionnée des GAGs, avec différents polyélectrolytes en milieu aqueux, c'est essentiellement à des fins de caractérisation de ces mêmes GAGs, par exemple dans des techniques analytiques.

Aucun de ces documents ne s'est réellement intéressé à la séparation de ces mêmes GAGs dans un milieu complexe, dans des conditions industrielles, c'est à dire en tant que technique de production de GAGs relativement purs.

Conformément au document GB-A-2074178, on a proposé une méthode de séparation sélective de l'héparine, consistant à :

- obtenir une polyamine insoluble en milieu aqueux, quel que soit le pH, ayant la forme d'une résine cationique, très différente au plan chimique d'un polysaccharide comme le chitosane
- mettre en présence le milieu de départ, comprenant l'héparine, avec la résine, pour piéger par liaison ionique l'héparine
- régénérer la résine, avec une solution aqueuse saline de chlorure de sodium, pour récupérer l'héparine, la résine cationique demeurant insoluble dans la solution aqueuse de régénération.

Une telle méthode présente les inconvénients suivants.

Il s'agit d'une méthode spécifique à l'héparine, et ne pouvant être généralisée à tous les GAGs.

Une telle méthode s'avère relativement peu sélective vis à vis de milieux complexes, contenant les contaminants tels qu'explicités précédemment, comme par exemple l'acide hyaluronique.

Le rendement de la phase de régénération de la résine demeure faible, de telle sorte que le rendement global de la méthode selon GB-A-2074178 demeure également faible, ce qui rend ladite méthode impropre à une extrapolation ou utilisation industrielle.

La cinétique de complexation du GAGs demeure relativement lente, eu égard à la diffusion préalable et nécessaire du milieu contenant l'héparine dans les mailles de la résine cationique, vers les fonctions ou sites amines de cette dernière. Une telle cinétique contrarie également l'application industrielle d'une telle méthode.

La présente invention a pour objet de remédier aux inconvénients précédents, et concerne un procédé ou méthode de séparation de GAGs, à partir d'un milieu complexe contenant des contaminants "concurrents" au GAGs, vis à vis d'un agent de précipitation ou complexation par voie ionique macromoléculaire, à savoir une polyamine hydrosoluble en milieu acide, le chitosane par exemple. Plus précisément, l'invention a pour objet un procédé compatible avec une production industrielle, en termes de rendement, le plus proche possible de 100 %, cinétique, et pureté du GAGs obtenu.

Selon la présente invention, on procède selon deux étapes essentielles :

1) dans une première étape de précipitation, on mélange au milieu complexe de départ la polyamine hydrosoluble, en contrôlant le pH du mélange à une valeur inférieure au potentiel de dissociation ionique (pKa) des fonctions carboxyliques libres, et des contaminants et du GAGs, pour obtenir sélectivement un complexe macromoléculaire ionique précipité, essentiellement entre le GAGs et la polyamine hydrosoluble

2) dans une deuxième étape de relargage, dans un milieu de suspension du précipité, simultanément on solubilise le GAGs, et on maintient sous forme insoluble la polyamine, le milieu de suspension comprenant un agent de neutralisation concomitante, et des fonctions carboxyliques ionisées du GAGs, et des fonctions amines ionisées de la polyamine.

Selon l'invention, la polyamine hydrosoluble retenue, par exemple le chitosane, est soluble à la fois dans le milieu complexe de départ et le milieu de suspension du précipité.

A partir de la solution de GAGs obtenue par l'étape de relargage, on peut isoler le GAGs recherché par tout moyen approprié et connu en soi, filtration, centrifugation, etc ...

Le procédé selon la présente invention apporte en outre les avantages ou résultats substantiels suivants.

Lors de la deuxième étape de relargage, la dissolution du complexe est sélective vis à vis du seul GAGs, ce qui facilite la récupération postérieure de ce dernier. A la limite, la deuxième étape permet à elle seule de récupérer le GAGs, en particulier lorsque l'agent de neutralisation est un sulfate alcalin.

La polyamine obtenue sous forme solide dans l'étape de relargage peut être recyclée, éventuellement, après neutralisation en milieu basique.

L'étape de relargage selon l'invention évite toute formation de gel de la polyamine, comme cela pourrait être le cas avec un milieu de suspension comprenant un sel à anion monovalent, par exemple du chlorure de sodium. De tels gels sont incompatibles avec une technique industrielle, en raison de leurs difficultés de centrifugation ou filtration.

Le procédé selon l'invention préserve pour l'essentiel l'intégrité physico-chimique des GAGs séparés, et donc leurs propriétés, par exemple coefficient de sédimentation.

Le procédé selon l'invention est applicable dans un large spectre de concentrations des GAGs dans le milieu complexe de départ, depuis des faibles concentrations de l'ordre de 0,01 % en poids, jusqu'à de fortes concentrations de l'ordre de 20 % en poids ; les concentrations les plus appropriées étant comprises entre 0,05 et 5 % en poids.

Le procédé selon l'invention peut être mis en oeuvre avec des produits peu coûteux, non toxiques, donc compatibles avec des applications médicales des GAGs séparés.

Préférentiellement, l'agent de neutralisation est :

- soit un sel à anion polyvalent, par exemple un sulfate alcalin
- soit une base minérale forte, notamment la soude ou la potasse

Ces deux agents peuvent d'ailleurs être utilisés successivement.

Dans le premier cas, les anions polyvalents, par exemple les ions bivalents du sulfate de sodium, forment avec la polyamine, par exemple le chitosane un complexe, de nature électrostatique, insoluble en milieu aqueux, sous forme de réseau schématisé ci-après :

Chitosane-$NH_3^{\oplus}$ $SO_4^{\ominus}$ $NH_3^{\oplus}$ Chitosane

Ces liaisons de type électrostatique déplacent les liaisons préexistantes :

GAGs - $SO_4^{\ominus}$ $NH_3^{\oplus}$ - chitosane

ce qui libère totalement le GAGs en solution.

Cette libération est quasiment totale, lorsque le rapport $SO_4^{--}$ /$NH_3^{+}$ (chitosane) est au moins égal à 0,5.

Une telle méthode permet d'obtenir un volume de précipité de la polyamine nettement inférieur au volume du complexe macromoléculaire ionique, ce qui permet un relargage dans de faibles volumes du milieu de suspension, pour obtenir des solutions de GAGs pouvant atteindre 10 % en poids sec.

Cette première méthode sera préférée à la seconde, lorsque les GAGs à séparer sont hydrolysables en milieu basique pour des pH supérieurs à 10,5 - 11, par exemple héparane sulfate.

Dans le second cas, la base minérale provoque un déplacement ionique selon le schéma réactionnel suivant :

$$\text{GAGs} - SO_4^{\ominus}\ HN_3^{\oplus} - \text{Chitosane} + 2NaOH \longrightarrow$$
$$\text{GAGs} - SO_4^{\ominus}\ Na^{\oplus} + NH_2 - \text{Chitosane} + 2H_2O$$

Les GAGs sont solubilisés par formation de leurs sels de sodium, totalement ionisés. Et le chitosane devient insoluble par perte de son ionisation au niveau des fonctions amines.

Cette deuxième méthode peut être utilisée seule pour la purification des chondroitines 4 et 6 sulfate.

Cette seconde méthode s'avère relativement rapide pour libérer les GAGs, et permet de libérer directement sous forme solide la polyamine, laquelle peut alors être immédiatement recyclée.

Et la combinaison des deux méthodes, à savoir sel à anion polyvalent suivi d'une base minérale forte, permet de libérer à la fois des GAGs sous forme disodique par exemple, en solution concentrée, et la polyamine sous forme solide non ionisée. Par exemple, selon cette méthode une suspension du complexe dans de l'eau est additionnée d'une quantité de sulfate de sodium équivalente à un rapport de 0,5 au moins entre les ions sulfate et les groupements amine présents dans le chitosane complexe. La suspension est agitée à température ambiante, puis l'alcalinisation du milieu est réalisée jusqu'à obtention d'un pH stabilisé compris entre 8,5 et 11. La suspension est agitée et la solution de GAGs est récupérée par filtration ou centrifugation.

La combinaison des deux méthodes de relargage selon l'invention peut étre utilisée dans tous les cas.

Par ailleurs, le chitosane utilisé dans le procédé de l'invention est, de préférence, obtenu par N-désacétylation de chitine de crustacés.

Son poids moléculaire est au moins égal à 50 KD, mais il a préférentiellement une valeur supérieure à 500 KD, tandis que son degré d'acétylation est compris entre 0 et 30 %, préférentiellement 0-20 %.

Conformément à un mode de mise en oeuvre de l'invention, le procédé consiste à exécuter successivement les étapes suivantes :

a) acidification du milieu complexe de départ pour l'amener à un pH compris entre 1 et 4 ;

b) préparation d'une solution acide de la polyamine à un pH compris entre 1 et 4 ;

c) mélange sous agitation du milieu complexe acidifié et de la solution acide de polyamine, de manière à obtenir un complexe macromoléculaire ionique ;

d) isolement du complexe, puis relargage du GAGs, par mise en suspension du complexe dans une solution alcaline aqueuse, à un pH compris entre 9 et 13, tout en maintenant une agitation lente ;

e) récupération de la fraction liquide de GAGs obtenue ;

- neutralisation de cette fraction liquide au moyen d'acide,
- élimination des sels de cette fraction liquide.

Les GAGs en solution ainsi obtenus peuvent être transformés en une forme solide par tout moyen approprié, et connu en soi, tel que la précipitation, la lyophilisation ou la déshydratation simple.

Pour acidifier le milieu complexe de départ, il est préférable d'utiliser un acide minéral tel que l'acide chlorhydrique, une valeur de pH de l'ordre de 2 étant considérée comme optimale.

Par ailleurs, un acide organique monocarboxylique tel que l'acide acétique est avantageusement employé pour la préparation de la solution acide de chitosane, à un pH de l'ordre de 3, la concentration en chitosane de cette solution étant égale environ à 1 %.

Le mélange : solution de départ de GAGs/solution acide de chitosane est maintenu sous agitation pendant une durée comprise entre vingt minutes et une heure trente minutes.

L'alcalinisation de la solution pour le relargage des GAGs s'effectue, de préférence, à l'aide d'hydroxyde de sodium aqueux, l'agitation lente étant maintenue pendant deux à vingt-quatre heures.

Dans l'étape b) de la mise en oeuvre préférée et définie ci-dessus, le chitosane est dissous dans une solution d'acide minéral ou organique, maintenue à pH compris entre 1,5 et 3,7. Cette solution visqueuse ne doit pas contenir plus de 1,5 % de chitosan. On retient de préférence une concentration de 1 %.

Il est à noter que le milieu complexe de départ et la solution acide de chitosane peuvent présenter des valeurs de pH identiques ou différentes, fixées par l'addition dans chacune d'elles de solutions d'acides minéraux ou organiques monocarboxyliques, à l'exception des acides contenant des anions de valence supérieure à 1 tels que l'acide sulfurique ou l'acide phosphorique par exemple.

Lorsque des acides minéraux tels que l'acide chlorhydrique sont utilisés, le pH du milieu complexe de départ doit être compris entre 1,5 et 2,5, et la solution acide de chitosane doit être amenée à un pH compris dans le même intervalle.

Lorsque des acides organiques tels que l'acide acétique ou l'acide formique sont utilisés, les pH doivent être compris entre 3 et 3,7 pour l'acide acétique et 2,5-3,5 pour l'acide formique. Dans tous les cas, quel que soit l'acide carboxylique utilisé, le pH ne doit pas être supérieur à 3,8 ; de même, quel que soit l'acide minéral utilisé, le pH ne doit pas excéder 2,5.

Comme indiqué ci-avant, les deux solutions réagissant dans l'étape c) peuvent être amenées à pH acide par des acides différents. Ainsi, le milieu complexe de départ peut être ajustée à pH 2 par de l'acide chlorhydrique, et la solution de chitosane à pH 3 par de l'acide formique, ou à pH 3,5 par de l'acide acétique, par exemple.

Toutes les combinaisons sont possibles, mais les milieu complexe de départ est généralement acidifié par un acide minéral, préférentiellement par l'acide chlorhydrique. Cette solution de GAGs doit être limpide avant précipitation par le chitosane.

L'étape suivante est la formation d'un complexe glycosaminoglycanes sulfatés/chitosane, par précipitation sélective. Elle consiste à ajouter lentement la solution de chitosane dans la solution de départ de glycosaminoglycanes sulfates, maintenue sous forte agitation, cet ordre d'addition pouvant évidemment être inversé.

Un précipité blanc se forme alors instantanément, et l'addition du chitosane est poursuivie jusqu'à la fin de la précipitation qui peut être appréciée par l'augmentation de la viscosité de la solution dès que le chitosane est en excès.

Le complexe formé est insoluble dans le milieu de précipitation, en raison de la formation de liaisons ioniques entre les groupements sulfate des glycosaminoglycanes et les groupements amine du chitosane. Ces liaisons, établies entre de multiples chaînes des deux polymères, aboutissent à la formation d'un réseau dense de haut poids moléculaire.

Les espèces contaminantes dans le milieu complexe de départ, identifiées précédemment sont capables de contracter des liaisons électrostatiques avec le chitosane. Ces liaisons s'établissent lorsque les groupements carboxyliques des aminoacides sont ionisés. En revanche, lorsque le milieu est défavorable à l'ionisation, les interactions électrostatiques avec le chitosane sont fortement réduites, voire nulles. Ces conditions défavorables sont obtenues par acidification du milieu à des pH très inférieurs au pKa des fonctions carboxyliques libres des contaminants.

Les glycosaminoglycanes sulfatés, présents dans le milieu, contiennent sur une même molécule à la fois des groupements acide carboxylique et des groupements sulfate. La suppression de l'ionisation des seuls groupements carboxyliques, dont le pKa est voisin de 3,5, est obtenue par acidification du milieu à des pH inférieurs également au pKa des fonctions carboxyliques des GAGs. En revanche, les groupements

sulfate qui peuvent être considérés comme des groupements acides forts demeureront ionisés pour des pH compris entre 1,5 et 2,5. Dans ces conditions, les seules molécules contenues dans le milieu complexe de départ qui peut contracter des liaisons électrostatiques avec le chitosane, sont les glycosaminoglycanes, ces liaisons s'établissant au niveau de leurs groupements sulfate.

On peut montrer qu'à pH compris entre 1,5 et 2,5 la précipitation des glycosaminoglycanes sulfatés est totale, lorsque la quantité de chitosane entrant dans la formation du complexe correspond à une égalité en nombre entre les groupements amine libre de ce composé et les groupements sulfate des glycosaminoglycanes.

A la fin de la précipitation, la suspension obtenue est agitée pendant trente minutes à une heure, puis elle est centrifugée. Le surnageant est éliminé, et le précipité est mis en suspension dans dix à cinquante fois son volume d'eau, par agitation violente ou par broyage. La suspension est centrifugée et le culot est récupéré.

Le complexe chitosane-glycosaminoglycanes se présente sous la forme de particules molles qui s'aggrègent pour donner une masse malléable qui se délite sous forte agitation.

Le procédé de l'invention se poursuit par la phase de dissociation qui conduit au relargage des glycosaminoglycanes.

Ce dernier peut être effectué suivant différentes techniques :

- déplacement électrostatique, à l'aide de sels tels que le sulfate de sodium par exemple, jusqu'à des concentrations comprises entre 0,7 et 2 moles par litre ;
- déplacement ionique, par augmentation du pH du milieu de suspension, jusqu'à des valeurs comprises entre 9,5 et 12,5 ;
- combinaison de ces deux techniques.

L'alcalinisation du milieu consiste à disperser sous forte agitation le complexe chitosane-glycosaminoglycanes dans un volume d'eau de cinq à dix fois plus grand que celui du précipité, puis la suspension est ensuite amenée à un pH compris entre 9,5 et 12,5 préférentiellement 11, par ajout d'une solution concentrée d'hydroxydes alcalins tels que les hydroxydes de sodium ou de potassium, et elle est agitée lentement pendant deux à vingt-quatre heures. Au terme de cette durée, qui varie en fonction des conditions opératoires telles que le granulométrie des grains du complexe, la force ionique, le pH du milieu et la température, la réaction de solubilisation est complète. Le chitosane sous forme solide ainsi obtenu est séparé de la solution de GAGs par filtration ou centrifugation. Il est lavé à l'eau, puis conservé sous forme humide à $+4^{\circ}$ C, ou déshydraté par des méthodes connues (chaleur, vide, solvants)... Il est ainsi recyclé pour d'autres opérations de purification des GAGs.

La perte en chitosane, au cours des différentes étapes de purification est estimée à 2-4 % de la masse de départ.

La solution de glycosaminoglycanes, totalement débarrassée du chitosane, est neutralisée ou acidifiée jusqu'à un pH de l'ordre de 2.

Advantageusement, la ou les solutions réunies purifiées de glycosaminoglycanes sulfatés sont dialysées contre de l'eau, pour éliminer la majorité des sels. Le dialysat peut être utilisé tel quel, ou concentré par des techniques usuelles telles que évaporation ou ultrafiltration jusqu'à l'obtention de solutions contenant de 2 à 20 % de matières sèches. A partir de ces solutions, les GAGs peuvent être obtenus sous forme solide, soit par précipitation dans l'alcool éthylique, soit par lyophilisation ou déshydratation simple. L'étape de dialyse peut être supprimée dans le cas où l'ultra-filtration est utilisée comme moyen de concentration, et si les GAGs sont obtenus sous forme solide à partir de la solution concentrée, par précipitation à l'éthanol ou avec un autre alcool.

En vue de compléter l'illustration du procédé selon l'invention, il est décrit, ci-après sept exemples non limitatifs de mise en oeuvre de celui-ci.

EXEMPLE 1

200 g d'extrait sec de chondroïtines 4 et 6 sulfate contenant environ 130 g de GAGs purs sous forme de sel de sodium (dosage des hexosamines) sont dissous dans 10 kg d'eau, et la solution est amenée à pH 2 par une solution aqueuse d'acide chlorhydrique 5N. La solution est centrifugée après vingt minutes d'agitation à 2 000 g pendant dix minutes. Le surnageant limpide est additionné d'une solution de chitosane jusqu'à précipitation complète.

La solution mère de chitosare est préparée par dissolution de 100 g de chitosane purifié dans 10 kg d'eau maintenue à pH 2 par addition d'acide chlorhydrique 5N.

La suspension est agitée pendant trente minutes puis laissée au repos pendant quinze minutes, puis le

surnageant est éliminé (détection des glycosaminoglycanes par la précipitation au bleu alcian: négative).

Le précipité gommeux obtenu est dispersé par broyage à l'aide d'un homogénéiseur commercialisé sous la dénomination commerciale "Turrax" dans 5 kg d'eau déminéralisée, puis après quinze minutes d'agitation, le précipité est collecté par décantation. Le précipité est alors dispersé dans 1,7 kg d'eau et de l'hydroxyde de sodium aqueux 5N est ajouté jusqu'à un pH 10 stable. Après trois heures et demi d'agitation, la suspension est filtrée, et le filtrat est amené à pH 7 par de l'acide chlorhydrique 6N. Le rétentat constitué de chitosane est lavé par 1 kg d'eau puis essoré, et les eaux de lavage sont mélangées au filtrat précédent après avoir été ajustées à pH7.

La solution obtenue est dialysée en continu contre de l'eau déminéralisée, et le dialysat est filtré sur cellulose 40 µm, puis concentré par évaporation et enfin lyophilisé.

La masse du lyophilisé obtenu est de 141 g comprenant environ 9 g d'eau et 127 ± 5 g de glycosaminoglycanes (dosage des hexosamines).

Le dosage des protéines par la méthode de Lowry a donné les résultats suivants :

- extrait brut de GAGs : 32 % équivalent BSA
- lyophilisé : 0,35 % équivalent BSA.

Le dosage effectué par la méthode du biuret a donné 24 % pour les extraits bruts et des quantités non détectables, c'est-à-dire inférieures à 0,5 %, pour les lyophilisés.

EXEMPLE 2

Même protocole que précédemment mais la solution de chitosane est obtenue dans un milieu acide acétique à pH 3,5.

EXEMPLE 3

Même protocole que dans l'exemple 2, mais l'acide acétique est remplacé par l'acide formique à pH 2,8.

EXEMPLE 4

Même protocole que dans l'exemple 1, mais les solutions de GAGs et de chitosane sont acidifiées par de l'acide formique pur jusqu'à obtention d'un pH de 2,8.

EXEMPLE 5

Protocole identique à l'exemple 4 mais l'acide formique est remplacé par l'acide acétique à pH 3,5.

EXEMPLE 6

Protocole identique à l'exemple 1

Le précipité est dispersé dans 1,5 kg d'eau, puis 64g de sulfate de sodium anhydre sont ajoutés à la suspension obtenue, sous forte agitation. L'agitation est poursuivie pendant 24h puis le milieu visqueux obtenu est centrifugé. Le culot est dispersé dans 0,8 Kg d'eau et agité pendant 2h, puis la suspension est centrifugée. Le surnageant est alors mélangé au surnageant précédent, et la solution obtenue est amenée à pH7 par une solution d'hydroxyde de sodium 5N. Après dialyse en continu contre de l'eau déminéralisée, la solution est filtrée sur cellulose 40 µm, puis lyophilisée pour donner les GAGs purifiés sous forme disodique.

Le culot obtenu précédemment à la deuxième centrifugation est mis en suspension dans 2Kg d'eau, et le pH est amené à 11 par une solution d'hydroxyde de sodium 5N. Après 2h d'agitation la suspension est filtrée ou centrifugée et le retentat est lavé par de l'eau déminéralisée jusqu'à neutralité des effluents.

EXEMPLE 7

5 kg de chondroitines 4 et 6 sulfate sont dissous dans 200 kg d'eau déminéralisée et la solution est amenée à pH2 par de l'acide chlorhydrique 5N. La solution est centrifugée en continu après 45 mm d'agitation à 2000g. Le surnageant limpide est additionné d'une solution de chitosane jusqu'à précipitation complète.

La solution de chitosane est préparée par dissolution de 2,5kg de chitosane purifié dans 250kg d'eau déminéralisée maintenue à pH2 par addition d'acide chlorhydrique 5N.

Le milieu de précipitation est agité pendant 1h, puis la phase liquide est éliminée après décantation du complexe. 150kg d'eau à pH2 sont ajoutés au résidu solide et le mélange est agité pendant 1h, puis centrifugé en continu à 2000g pour donner une masse gommeuse de 15-20kg. Celle-ci est dispersée dans 50kg d'eau sous forte agitation puis 1,6kg de sulfate de sodium anhydre sont ajoutés. La suspension est agitée pendant 4h puis de l'hydroxyde de sodium aqueux 5N est ajouté jusqu'à pH 10 stable. La suspension est agitée pendant 16h puis le mélange est filtré. Le rétentat est remis en suspension dans 10kg d'eau et agité pendant 2h. Après filtration, les filtrats sont réunis et amenés à pH7 par HCl 5N, puis dialysés en continu contre de l'eau déminéralisée. Les dialysats sont filtrés sur cellulose 40 $\mu$m puis lyophilisés.

## Revendications

**1** - Procédé de séparation de glycosaminoglycannes sulfatés (en abrégé GAGs), à partir d'un milieu complexe de départ, comprenant en solution au moins un GAGs et des contaminants avec des fonctions acide aminé, notamment des protéines et peptides, procédé selon lequel on précipite sélectivement le GAGs par complexation avec une polyamine hydrosoluble, notamment du chitosane, caractérisé en ce que :

- dans une première étape de précipitation, on mélange au milieu complexe de départ la polyamine hydrosoluble, en contrôlant le pH du mélange à une valeur inférieure au potentiel de dissociation ionique (pKa) des fonctions carboxyliques libres, et des contaminants et du GAGs, pour obtenir sélectivement un complexe macromoléculaire ionique précipité, essentiellement entre le GAGs et la polyamine hydrosoluble,
- dans une deuxième étape de relargage, dans un milieu de suspension du précipité, simultanément on solubilise le GAGs, et on maintient sous forme insoluble la polyamine, le milieu de suspension comprenant un agent de neutralisation concomitante et des fonctions carboxyliques ionisées du GAGs et de fonctions amines ionisées de la polyamine,

la polyamine hydrosoluble étant soluble à la fois dans le milieu complexe de départ et le milieu de suspension du précipité.

**2** - Procédé selon la revendication 1, caractérisé en ce que l'agent de neutralisation est un sel à anion polyvalent, par exemple un sulfate alcalin.

**3** - Procédé selon la revendication 1, caractérisé en ce que l'agent de neutralisation est une base minérale forte, notamment la soude ou la potasse.

**4** - Procédé selon la revendication 3, caractérisé en ce que le milieu de suspension du précipité est amené avec la base à un pH compris entre 8,5 et 11.

**5** - Procédé selon les revendications 2 et 3, caractérisé en ce que la deuxième étape de relargage est effectuée en deux stades, à savoir un premier stade avec un milieu de relargage avec sel divalent, et un deuxième stade avec un milieu de relargage alcalin.

**6** - Procédé selon la revendication 1, caractérisé en ce que la polyamine est du chitosane ayant un poids moléculaire supérieur à 50 KD, et un degré d'acétylation compris entre 0 et 30 %.

**7** - Procédé selon la revendication 1, caractérisé en ce que la première étape de précipitation comprend les sous-étapes suivantes :

a) acidification du milieu complexe de départ, pour l'amener à un pH compris entre 1 et 4

b) préparation d'une solution acide de la polyamine, à un pH compris entre 1 et 4

c) mélange sous agitation du milieu complexe acidifié et de la solution acide de polyamine

**8** - Procédé selon la revendication 1, caractérisé en ce que la solution du GAGs obtenue lors de la deuxième étape est neutralisée au moyen d'un acide ou d'une base, puis les sels de neutralisation sont séparés de la solution liquide, pour obtenir une fraction purifiée du GAGs.